Europäisches Patentamt

European Patent Office

Office européen des brevets

(19)

(11) Numéro de publication : **0 396 477 B1**

(12)

# FASCICULE DE BREVET EUROPEEN

(45) Date de publication du fascicule du brevet :
**01.12.93 Bulletin 93/48**

(51) Int. Cl.⁵ : **H02H 3/34**

(21) Numéro de dépôt : **90420191.0**

(22) Date de dépôt : **13.04.90**

(54) **Déclencheur statique pour un disjoncteur de protection d'un réseau triphase, permettant la détection du type de défaut.**

(30) Priorité : **03.05.89 FR 8906031**

(43) Date de publication de la demande :
**07.11.90 Bulletin 90/45**

(45) Mention de la délivrance du brevet :
**01.12.93 Bulletin 93/48**

(84) Etats contractants désignés :
**BE CH DE ES GB IT LI**

(56) Documents cités :
**EP-A- 0 020 047**
**DE-A- 1 961 774**

(56) Documents cités :
**US-A- 4 006 387**
**PATENT ABSTRACTS OF JAPAN vol. 7, no. 32**
**(P-174)(1177) 08 février 1983, & JP-A-57 184980**
**(MITSUBISHI) 13 novembre 1982,**

(73) Titulaire : **MERLIN GERIN**
**2, chemin des Sources**
**F-38240 Meylan (FR)**

(72) Inventeur : **Fraisse, Didier**
**Merlin Gerin, Sce. Brevets**
**F-38050 Grenoble Cedex (FR)**

(74) Mandataire : **Jouvray, Marie-Andrée et al**
**MERLIN GERIN Sce. Propriété Industrielle**
**F-38050 Grenoble Cédex 9 (FR)**

EP 0 396 477 B1

Jouve, 18, rue Saint-Denis, 75001 PARIS

## Description

L'invention concerne un déclencheur statique pour un disjoncteur électrique destiné à protéger un réseau électrique triphasé, comportant des moyens de détection du courant, délivrant des signaux analogiques proportionnels aux courants parcourant les conducteurs du réseau, et un ensemble électronique de traitement auquel sont appliqués lesdits signaux et délivrant un ordre de déclenchement du disjoncteur en cas de dépassement de seuils prédéterminés par lesdits signaux.

Les déclencheurs connus assurent les fonctions classiques de protection, notamment les déclenchements long retard, court retard, instantané et éventuellement de protection terre, sans faire de distinction entre les défauts affectant une ou plusieurs phases du réseau.

Dans un certain nombre de cas, les déclencheurs connus ne fournissent pas une protection appropriée lorsqu'ils traitent un défaut déséquilibré de la même manière qu'un défaut affectant les trois phases.

Selon l'invention cet inconvénient est écarté par le fait que l'ensemble électronique de traitement comporte des moyens de détection du type de défaut, comportant des moyens de comparaison desdits signaux à un premier seuil, des moyens de comparaison desdits signaux à un second seuil, supérieur au premier seuil, et des moyens permettant de déterminer si au moins un premier nombre prédéterminé de signaux est inférieur au premier seuil tandis que, simultanément, au moins un second nombre prédéterminé de signaux est supérieur au second seuil.

Selon une première variante de réalisation, on détecte l'existence d'un défaut monophasé en s'assurant que deux conducteurs du réseau, trois dans le cas d'un réseau triphasé avec neutre, sont parcourus par des courants inférieurs au premier seuil, qui est par exemple de l'ordre de 1,5 In (In étant le courant nominal du disjoncteur), tandis qu'un autre conducteur du réseau est parcouru par un courant supérieur au second seuil, qui est par exemple de 5 In.

Le signal délivré par les moyens de détection du type de défaut lors de la détection d'un défaut monophasé est utilisé par l'ensemble électronique de traitement pour fournir une protection appropriée.

En effet, les protections long et court retard, bien adaptées en cas de défaut triphasé, se révèlent trop lentes en cas de défaut monophasé, traduisant un déséquilibre du réseau, et la détection de ce type de défaut permet à l'ensemble électronique de traitement de shunter les fonctions long ou court retard, et d'ouvrir plus rapidement le disjoncteur.

Selon une seconde variante de l'invention, on détecte l'existence d'un défaut du type "deux pôles série" dans un réseau triphasé avec neutre en s'assurant que deux conducteurs du réseau sont parcourus par des courants inférieurs au premier seuil, qui est par exemple de l'ordre de In, tandis que deux conducteurs sont parcourus par des courants supérieurs au second seuil, qui est par exemple de l'ordre de 2 ou 3 In.

Selon un mode particulier de réalisation l'ensemble électronique de traitement comportant des moyens de réalisation d'une fonction de protection terre, et des moyens de désensibilisation de la protection terre lorsque les signaux mesurés dépassent un seuil prédéterminé, le signal de sortie des moyens de détection du type de défaut inhibe lesdits moyens de désensibilisation lorsqu'il est représentatif d'un défaut du type deux pôles série.

D'autres avantages et caractéristiques ressortiront plus clairement de la description qui va suivre d'un mode particulier de réalisation de l'invention, donné à titre d'exemple non limitatif et représenté aux dessins annexés dans lesquels:

- la figure 1 représente un schéma bloc simplifié d'un déclencheur dans lequel l'invention peut être mise en oeuvre;
- la figure 2 représente un mode particulier de réalisation des moyens de détection du type de défaut selon l'invention;
- la figure 3 illustre le seuil de déclenchement homopolaire désensibilisé en fonction du courant maximum dans les conducteurs du réseau.

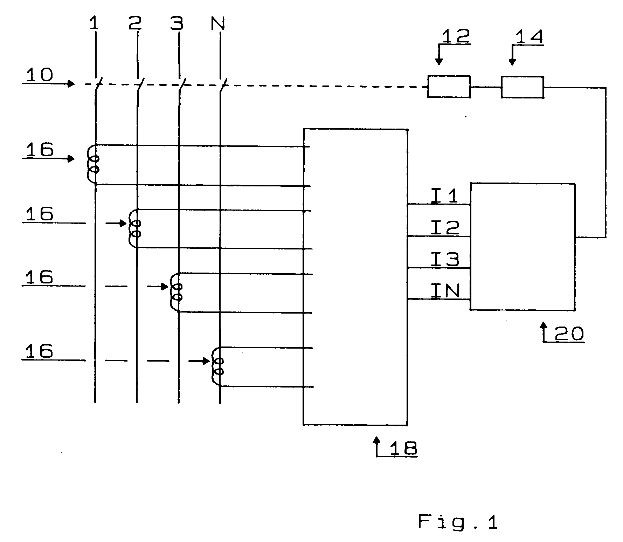

Sur la figure 1, un réseau de distribution électrique triphasé, comportant trois conducteurs de trois phases 1,2,3 et un conducteur de neutre N comporte un disjoncteur 10 susceptible d'interrompre le circuit en position d'ouverture. Le mécanisme 12 du disjoncteur 10 est piloté par un relais polarisé 14 de commande de déclenchement du disjoncteur en cas de surcharge ou de court-circuit. A chaque conducteur (1,2,3,N) est associé un transformateur de courant 16 qui délivre un signal analogique représentatif du courant parcourant le conducteur associé. Ces signaux sont appliqués à un circuit de redressement 18 dont les sorties I1,I2,I3 et IN sont appliquées à un ensemble électronique de traitement 20 dont la sortie contrôle le relais polarisé 14.

Le déclencheur assure des fonctions standards de protection, notamment les déclenchements long retard et/ou court retard, lorsqu'un défaut apparaît dans le réseau. Il est inutile de décrire en détail ces fonctions de protection qui sont bien connues des spécialistes.

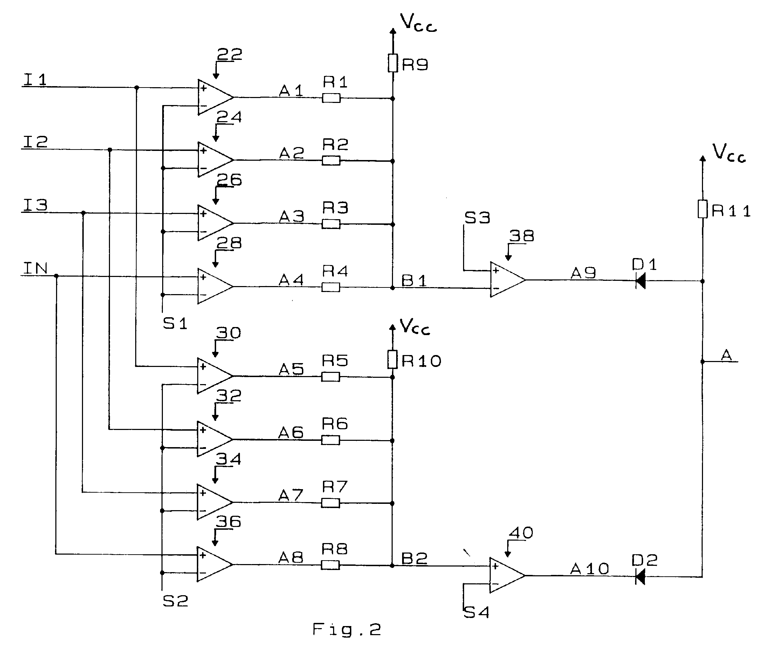

Selon l'invention l'ensemble 20 comporte des moyens de détection du type de défaut dont un mode particulier de réalisation est représenté sur la figure 2.

Les signaux I1,I2,I3 et IN, représentatifs des courants parcourant les conducteurs du réseau sont appliqués à l'entrée des moyens de détection du type de défaut.

Sur la figure 2, chaque signal est respectivement appliqué à l'entrée non-inverseuse d'un des amplificateurs opérationnels d'une première série d'amplificateurs 22 à 28. Les entrées inverseuses de tous les amplificateurs de cette première série sont reliées à une même tension de seuil S1. De cette manière les signaux A1,A2,A3 et A4, de sortie des amplificateurs de la première série passent respectivement au niveau logique 1 lorsque le courant d'entrée I1,I2,I3 et IN correspondant est supérieur au seuil S1.

De manière analogue, les amplificateurs d'une seconde série d'amplicateurs opérationnels 30 à 36 reçoivent sur leurs entrées non-inverseuses les courants respectifs I1,I2,I3 et IN, tandis que leurs entrées inverseuses sont reliées à une même tension de seuil S2. Les signaux A5,A6,A7 et A8 de sortie des amplificateurs de la seconde série passent donc respectivement au niveau logique 1 lorsque le courant d'entrée correspondant est supérieur au seuil S2.

Les sorties (A1 à A4) des amplificateurs 22 à 28 de la première série sont respectivement connectées, par l'intermédiaire d'une résistance (R1 à R4), à l'entrée inverseuse d'un amplificateur opérationnel 38, cette entrée inverseuse étant également connectée, par l'intermédiaire d'une résistance R9, à une tension d'alimentation Vcc, cette tension d'alimentation alimentant également l'ensemble des amplificateurs opérationnels. L'entrée non inverseuse de l'amplificateur 38 est connectée à une tension de référence S3.

Les sorties (A5-A8) des amplificateurs (30-36) de la seconde série sont respectivement connectées, par l'intermédiaire d'une résistance(R5 à R8), à l'entrée non-inverseuse d'un amplificateur opérationnel 40, cette entrée non-inverseuse étant également connectée par l'intermédiaire d'une résistance R10, à la tension d'alimentation Vcc. L'entrée inverseuse de l'amplificateur 40 est connectée à une tension de référence S4.

Les sorties A9 et A10 des amplificateurs 38 et 40 sont respectivement connectées à la cathode de première et seconde diodes, D1 et D2, dont les anodes sont connectées à la sortie A du circuit de détection du type de défaut et, par l'intermédiaire d'une résistance R11, à la tension d'alimentation.

Le fonctionnement du circuit de détection du type de défaut selon la figure 2 est décrit ci-dessous.

Toutes les résistances(R1 à R4 et R9) connectées à l'entrée inverseuse de l'amplificateur 38 étant identiques, le signal B1 appliqué sur cette entrée prend les valeurs suivantes:

$B1 = Vcc/5$, lorsque $A1 = A2 = A3 = A4 = 0$, soit lorsque tous les courants mesurés sont inférieurs au seuil S1.

$B1 = 2Vcc/5$, lorsqu'un des courants est supérieur à S1

$B1 = 3Vcc/5$, lorsque 2 des courants sont supérieurs à S1

$B1 = 4Vcc/5$, lorsque 3 des courants sont supérieurs à S1

$B1 = Vcc$, lorsque tous les courants sont supérieurs à S1, $(A1 = A2 = A3 = A4 = 1)$

De même, toutes les résistances (R5 à R8 et R10) connectées à l'entrée non-inverseuse de l'amplificateur 40 étant identiques, le signal B2 appliqué sur cette entrée prend les valeurs suivantes:

$B2 = Vcc/5$, lorsque tous les courants mesurés sont inférieurs au seuil S2 $(A5 = A6 = A7 = A8 = 0)$

$B2 = 2Vcc/5$, lorsqu'un des courants est supérieur à S2

$B2 = 3Vcc/5$, lorsque 2 des courants sont supérieurs à S2

$B2 = 4Vcc/5$, lorsque 3 des courants sont supérieurs à S2

$B2 = Vcc$, lorsque tous les courants sont supérieurs à S2, $(A5 = A6 = A7 = A8 = 1)$.

Le signal A9 de sortie de l'amplificateur 38 étant au niveau logique 1 tant que B1 est inférieur à la tension de référence S3, et passant au niveau logique 0 dès que B1 est supérieur à S3, le choix de la tension de référence S3 permet d'obtenir en A9 un signal représentatif du nombre de signaux A1,A2,A3,A4 au niveau logique 0, donc du nombre de courants inférieurs au seuil S1.

De manière analogue, le signal A10 de sortie de l'amplificateur 40 étant au niveau logique 0 tant que B2 est inférieur à la tension de référence S4, et passant au niveau logique 1 dès que B2 est supérieur à S4, le choix de la tension de référence S4 permet d'obtenir en A10 un signal représentatif du nombre de signaux A5,A6,A7,A8 au niveau logique 1, donc du nombre de courants supérieurs au seuil S2.

Les diodes D1 et D2 réalisent une fonction logique ET entre les sorties A9 et A10. En effet la sortie A du circuit de détection de défaut n'est au niveau logique 1 que si les deux sorties A9 et A10 sont simultanément au niveau logique 1. Ainsi le signal A est représentatif du fait qu'au moins un nombre prédéterminé de courants est inférieur au seuil S1 (A9 = 1) tandis qu'au moins un autre nombre prédéterminé de courants est supérieur au seuil S2 (A10 = 1).

Par un choix appropriée des tensions de seuil S1 et S2 et des tensions de référence S3 et S4, on peut détecter différents types de défaut.

Selon une première variante de réalisation, les tensions de référence S3 et S4 sont choisies de manière à ce que:

$$2\,Vcc/5 < S3 < 3\,Vcc/5$$
$$Vcc/5 < S4 < 2\,Vcc/5$$

Dans ces conditions, le signal A9 est au niveau logique 1 lorsqu'au moins trois courants sont inférieurs à S1 et le signal A10 est au niveau logique 1 lorsqu'au moins un courant est supérieur à S2. La tension de seuil S2 étant supérieure à la tension de seuil S1, le signal A de sortie du circuit de détection du type de défaut ne passe donc au niveau logique 1 que lorsque trois courants sont inférieurs à S1 tandis qu'un courant est supérieur à S2. Un tel signal est donc représentatif d'un défaut monophasé. A titre d'exemple non limitatif les tensions du seuil S1 et S2 peuvent être respectivement de l'ordre de 1,5 In et 5 In.

De manière analogue on peut détecter un défaut de type monophasé dans un réseau triphasé ne comportant pas de conducteur de neutre N. Dans ce cas le circuit ne comportant que trois entrées I1,I2 et I3, le signal A doit être représentatif du fait que deux courants sont inférieurs à S1 et un courant supérieur à S2. Pour celà les tensions de référence S3 et S4 sont telles que:

$$Vcc/2 < S3 < 3\,Vcc/4$$
$$Vcc/4 < S4 < Vcc/2$$

Selon une autre variante de réalisation, pour un réseau triphasé avec neutre, les tensions de référence S3 et S4 sont choisies de manière à ce que:

$$3\,Vcc/5 < S3 < 4\,Vcc/5$$
$$2\,Vcc/5 < S4 < 3\,Vcc/5$$

Dans ces conditions, le signal A9 est au niveau logique 1 lorsqu'au moins deux courants sont inférieurs à S1 et le signal A10 est au niveau logique 1 lorsqu'au moins deux courants sont supérieurs à S2. La tension de seuil S2 étant supérieure à la tension de seuil S1, le signal A de sortie du circuit de détection du type de défaut ne passe au niveau logique 1 que lorsque deux courants sont inférieurs à S1 tandis que deux courants sont supérieurs à S2. Un tel signal est représentatif d'un défaut du type deux pôles série, un même courant de défaut, supérieur à S2, circulant dans deux des conducteurs du réseau, tandis qu'un courant relativement faible, inférieur à S1, circule dans les deux autres conducteurs du réseau. A titre d'exemple non limitatif, on peut choisir des tensions S1 et S2 respectivement de l'ordre de In et de 2 ou 3 In.

Dans le mode de réalisation particulier décrit ci-dessus le circuit de détection du type de défaut est un circuit analogique. L'invention n'est en aucune manière limitée à ce type de réalisation. Bien au contraire elle peut être réalisée par tous moyens permettant de déterminer simultanément qu'un premier nombre prédéterminé de signaux est inférieur à un premier seuil S1 tandis qu'un second nombre prédéterminée de signaux est supérieur à un second seuil S2. Dans les déclencheurs à microprocesseur, ceci peut bien entendu être réalisé directement par le microprocesseur auquel sont appliqués les signaux (I1-IN) représentatifs des courants parcourant les conducteurs du réseau.

En cas de détection d'un défaut du type monophasé, l'ensemble électronique de traitement 20 du déclencheur shunte les fonctions long ou court retard et provoque une ouverture rapide du disjoncteur.

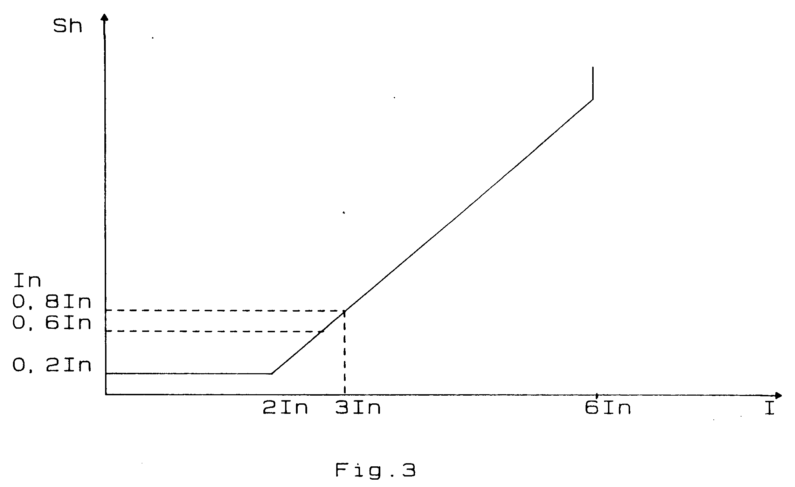

La détection d'un défaut du type deux pôles série est, quant à elle, utilisée, dans un déclencheur assurant une fonction de protection terre et comportant des moyens de désensibilisation de la protection terre lorsque les signaux mesurés dépassent un seuil prédéterminé, pour inhiber ces moyens de désensibilisation lors de la détection d'un défaut du type deux pôles série. En effet, dans un réseau polyphasé, lorsque les courants dans les conducteurs du réseau sont supérieurs à un certain seuil, par exemple 2 In, leur somme vectorielle n'est pas nulle, même en l'absence de défaut à la terre. Le signal ainsi recueilli est appelé faux courant homopolaire. Afin d'éviter des déclenchements intempestifs des disjoncteurs, dus non pas à un défaut homopolaire mais dus à l'existence de ce faux courant homopolaire, les disjoncteurs connus assurant une fonction de protection terre comportent généralement un système de désensibilisation de protection terre. Ces sytèmes permettent soit de relever le seuil de déclenchement terre Sh comme représenté sur la figure 3, soit de diminuer le signal de défaut terre, lorsque le courant circulant dans l'une des phases dépasse un certain seuil, par exemple 2 In. Cette protection, efficace si le défaut est en triphasé, peut masquer un défaut à la terre survenant sur un conducteur de phase très peu chargé, dans lequel le courant (par exemple 0,6 In sur la figure 3) serait de très peu supérieur au seuil de déclenchement homopolaire normal (0,2 In), si les deux autres conducteurs de phase sont très chargés, par exemple parcourus par un courant de 3 In. En effet dans ce cas, les déclencheurs connus désensibilisent la protection terre, par exemple en relevant ce seuil de déclenchement Sh, à une valeur (0,8 In sur la figure 3) supérieure au défaut terre (0,6 In) à détecter.

Or, lorsqu'un défaut du type deux pôles série affecte le réseau, deux conducteurs sont parcourus par un courant, identique en phase et en amplitude, relativement élevé (par exemple 3 In) et le faux courant homopolaire est pratiquement nul. La désensibilisation de la protection terre (Sh = 0,8 In pour I = 3 In) empêche alors la détection d'un défaut à la terre (compris entre 0,2 et 0,8 In) affectant un conducteur peu chargé. Or, le disjoncteur doit réagir plus rapidement à un défaut à la terre qu'au défaut, du type court retard, affectant les deux pôles en série. L'ensemble électronique de traitement 20 recevant un signal A représentatif d'un défaut du type deux pôles série inhibe la désensibilisation de la protection terre, permettant ainsi au déclencheur de détecter un défaut à la terre dans un autre conducteur du réseau. Il n'apparaît pas nécessaire de décrire plus en détail les moyens nécessaires à cette inhibition, qui peuvent être réalisés de manière classique, soit par des moyens analogiques, soit par programmation dans le cas d'un déclencheur à microprocesseur.

**Revendications**

1. Déclencheur statique pour un disjoncteur électrique destiné à protéger un réseau électrique triphasé, comportant des moyens (16) de détection du courant, délivrant des signaux analogiques proportionnels aux courants parcourant les conducteurs du réseau, et un ensemble électronique de traitement (20) auquel sont appliqués lesdits signaux (I1,I2,I3,IN) et délivrant un ordre de déclenchement du disjoncteur en cas de dépassement de seuils prédéterminés par lesdits signaux, déclencheur caractérisé en ce que l'ensemble électronique de traitement comporte des moyens de détection du type de défaut, comportant des moyens (22,24,26,28) de comparaison desdits signaux (I1,I2,I3,IN) à un premier seuil (S1), des moyens (30,32,34,36) de comparaison desdits signaux à un second seuil (S2), supérieur au premier seuil (S1), et des moyens (38,40,D1,D2) permettant de déterminer si au moins un premier nombre prédéterminé de signaux est inférieur au premier seuil (S1) tandis que, simultanément, au moins un second nombre prédéterminé de signaux est supérieur au second seuil (S2).

2. Déclencheur selon la revendication 1, caractérisé en ce que les moyens de détection du type de défaut délivrent un signal (A) représentatif d'un défaut monophasé lorsque ledit premier nombre est égal à deux et ledit second nombre à un.

3. Déclencheur selon la revendication 1, caractérisé en ce que, le réseau étant un réseau triphasé avec neutre, les moyens de détection du type de défaut délivrent un signal (A) représentatif d'un défaut monophasé lorsque ledit premier nombre est égal à trois, et ledit second nombre à un.

4. Déclencheur selon l'une quelconque des revendications 1 à 3, caractérisé en ce que In étant le courant nominal du disjoncteur, le premier seuil (S1) est de l'ordre de 1,5 In et le second seuil (S2) de l'ordre de 5 In.

5. Déclencheur selon la revendication 1, caractérisé en ce que, le réseau étant un réseau triphasé avec neutre, les moyens de détection du type de défaut délivrent un signal (A) représentatif d'un défaut du type deux pôles série lorsque lesdits premier et second nombres sont tout deux égaux à deux.

6. Déclencheur selon la revendication 5, caractérisé en ce que l'ensemble électronique de traitement comportant des moyens de réalisation d'une fonction de protection terre, et des moyens de désensibilisation de la protection terre lorsque les signaux mesurés dépassent un seuil prédéterminé, le signal (A) de sortie des moyens de détection du type de défaut inhibe lesdits moyens de désensibilisation lorsqu'il est représentatif d'un défaut du type deux pôles série.

7. Déclencheur selon l'une des revendications 5 et 6, caractérisé en ce que In étant le courant nominal du disjoncteur, le premier seuil (S1) est de l'ordre de In et le second seuil (S2) de l'ordre de 2 ou 3 In.

8. Déclencheur selon l'une quelconque des revendications 1 à 7, caractérisé en ce que ledit ensemble électronique de traitement (20) est constitué par un ensemble à microprocesseur.

9. Déclencheur selon l'une quelconque des revendications 1 à 7, caractérisé en ce que les moyens de comparaison des signaux à un premier seuil sont constitués par une première série d'amplificateurs opérationnels (22,24,26,28) recevant chacun sur l'entrée non-inverseuse le signal (I1,I2,I3,IN) représentatif du courant parcourant l'un des conducteurs du réseau et sur l'entrée inverseuse un signal représentatif dudit premier seuil (S1), les sorties (A1-A4) desdits amplificateurs opérationnels étant connectées, par l'intermédiaire de résistances respectives (R1-R4) à l'entrée inverseuse (B1) d'un premier amplificateur opérationnel (38), également connecté, par l'intermédiaire d'une résistance (R9), à une tension d'alimentation (Vcc), ledit premier amplificateur opérationnel (38) recevant sur son entrée non-inverseuse une première tension de référence (S3) déterminée de manière à ce que sa sortie (A9) soit au niveau logique 1 lorsqu'au moins ledit premier nombre prédéterminé de sorties (A1-A4) des amplificateurs de la première série est au niveau logique 0, une seconde série d'amplificateurs opérationnels (30,32,34,36) recevant chacun sur l'entrée non-inverseuse le signal (I1,I2,I3,IN) représentatif du courant parcourant l'un des conducteurs du réseau et sur l'entrée inverseuse un signal représentatif dudit second seuil (S2), les sorties (A5-A8) des amplificateurs de la seconde série étant connectées, par l'intermédiaire de résistances respectives (R5-R8), à l'entrée non-inverseuse (B2) d'un second amplificateur opérationnel (40), également connectée, par l'intermédiaire d'une résistance (R10), à la tension d'alimentation (Vcc), ledit second amplificateur opérationnel (40) recevant sur son entrée inverseuse une seconde tension de référence (S4) déterminée de manière à ce que sa sortie (A10), soit au niveau logique 1 lorsqu'au moins ledit second nombre prédéterminé de sorties (A5-A8) des amplificateurs de la seconde série est au niveau logique 1, les sorties (A9,A10) des premier et second amplificateurs opérationnels (38,40) étant respectivement connectées à la cathode de première et seconde diodes (D1,D2) dont les anodes sont connectées à la sortie (A) des moyens de détection du type de défaut et, par l'intermédiaire d'une résistance (R11), à la tension d'alimentation (Vcc).

**Patentansprüche**

1. Elektronischer Auslöser für einen Leistungsschalter zum Schutz eines elektrischen Dreiphasennetzes, der mit Mitteln (16) zur Stromerfassung und Bereitstellung von den Strömen in den Netzleitern proportionalen analogen Signalen sowie mit einer elektronischen Signalverarbeitungsschaltung (20) ausgestattet ist, die mit den genannten Signalen (I1, I2, I3, IN) beaufschlagt wird und bei Überschreiten bestimmter Schwellwerte durch die genannten Signale einen Befehl zur Auslösung des Leistungsschalters gibt, dadurch gekennzeichnet, daß die elektronische Signalverarbeitungsschaltung Mittel zur Erfassung des Fehlertyps aufweist, die Mittel (22, 24, 26, 28) zum Vergleich der genannten Signale (I1, I2, I3, IN) mit einem ersten Schwellwert (S1), Mittel (30, 32, 34, 36) zum Vergleich der genannten Signale mit einem über dem ersten Schwellwert (S1) liegenden zweiten Schwellwert (S2) sowie Mittel (38, 40, D1, D2) umfassen, mit denen bestimmt werden kann, ob mindestens eine erste festgelegte Anzahl von Signalen unter dem ersten Schwellwert (S1) liegt während gleichzeitig mindestens eine zweite festgelegte Anzahl von Signalen über dem zweiten Schwellwert (S2) liegt.

2. Auslöser nach Anspruch 1, dadurch gekennzeichnet, daß die Mittel zur Erfassung des Fehlertyps ein Signal (A) liefern, das ein Abbild eines einphasigen Fehlers darstellt, wenn die genannte erste Anzahl dem Wert zwei und die genannte zweite Anzahl dem Wert eins entsprechen.

3. Auslöser nach Anspruch 1, dadurch gekennzeichnet, daß bei einem Dreiphasennetz mit Neutralleiter die Mittel zur Erfassung des Fehlertyps ein Signal (A) liefern, das ein Abbild eines einphasigen Fehlers darstellt, wenn die genannte erste Anzahl dem Wert drei und die genannte zweite Anzahl dem Wert eins entsprechen.

4. Auslöser nach einem der Ansprüche 1 bis 3, dadurch gekennzeichnet, daß bei einem Nennstrom des Leistungsschalters von In der erste Schwellwert (S1) etwa 1,5 In und der zweite Schwellwert (S2) etwa 5 In betragen.

5. Auslöser nach Anspruch 1, dadurch gekennzeichnet, daß bei einem Dreiphasennetz mit Neutralleiter die Mittel zur Erfassung des Fehlertyps ein Signal (A) liefern, das ein Abbild eines Fehlers vom Typ "zwei Pole in Reihe" darstellt, wenn die genannte erste Anzahl und die genannte zweite Anzahl dem Wert zwei entsprechen.

6. Auslöser nach Anspruch 5, dadurch gekennzeichnet, daß die elektronische Signalverarbeitungsschaltung mit Mitteln zur Gewährleistung einer Erdschluß-Schutzfunktion sowie zur Unterdrückung des Erdschlußschutzes bei Überschreiten eines festgelegten Schwellwerts durch die Meßsignale ausgestattet ist, und dass die Wirkung der genannten Mittel zur Unterdrückung des Erdschlußschutzes durch das von den Mitteln zur Erfassung des Fehlertyps gelieferte Ausgangssignal (A) aufgehoben wird, wenn dieses aufgrund eines Fehlers vom Typ "zwei Pole in Reihe" erzeugt wird.

7. Auslöser nach Anspruch 5 und 6, dadurch gekennzeichnet, daß bei einem Nennstrom des Leistungsschalters von In der erste Schwellwert (S1) etwa In und der zweite Schwellwert (S2) etwa 2 oder 3 In betragen.

8. Auslöser nach irgendeinem der Ansprüche bis 7, dadurch gekennzeichnet, daß die genannte elektronische Signalverarbeitungsschaltung (20) aus einer Mikroprozessoreinheit besteht.

EP 0 396 477 B1

**9.** Auslöser nach irgendeinem der Ansprüche 1 bis 7, dadurch gekennzeichnet, daß die Mittel zum Vergleich der Signale mit einem ersten Schwellwert aus einer ersten Gruppe von Operationsverstärkern (22, 24, 26, 28) bestehen, deren nicht invertierender Eingang mit dem den Strom im jeweiligen Netzleiter abbildenden Signal (I1, 12, 13 IN) und deren invertierender Eingang mit dem den genannten ersten Schwellwert (S1) abbildenden Signal beaufschlagt werden, und die Ausgänge (A1-A4) der genannten Operationsverstärker über zugehörige Widerstände (R1-R4) mit dem invertierenden Eingang (B1) eines ersten Operationsverstärkers (38) verbunden sind, der gleichzeitig über einen Widerstand (R9) an eine Versorgungsspannung (Vcc) angeschlossen ist, wobei der nicht invertierende Eingang des genannten ersten Operationsverstärkers (38) mit einer bestimmten Referenzspannung (S3) beaufschlagt wird, derart daß sein Ausgang (A9) den Signalpegel 1 annimmt, wenn mindestens die genannte erste festgelegte Anzahl von Ausgängen (A1-A4) der ersten Verstärkergruppe den Signalpegel 0 aufweist, und eine zweite Gruppe von Operationsverstärkern (30, 32, 34, 36) an ihrem nicht invertierenden Eingang mit dem den Strom im jeweiligen Netzleiter abbildenden Signal (I1, I2, I3, IN) und an ihrem invertierenden Eingang mit einem den genannten zweiten Schwellwert (S2) abbildenden Signal beaufschlagt wird und die Ausgänge (A5-A8) der zweiten Verstärkergruppe über zugehörige Widerstände (R5-R8) mit dem nicht invertierenden Eingang (B2) eines zweiten Operationsverstärkers (40) verbunden sind, der gleichzeitig über einen Widerstand (R10) an die Versorgungsspannung (Vcc) angeschlossen ist, wobei der nicht invertierende Eingang des genannten zweiten Operationsverstärkers (40) mit einer bestimmten zweiten Referenzspannung (S4) beaufschlagt wird, derart daß sein Ausgang (A10) den Signalpegel 1 annimmt, wenn mindestens die genannte festgelegte zweite Anzahl von Ausgängen (A5-A8) der zweiten Verstärkergruppe den Signalpegel 1 aufweist, und wobei die Ausgänge (A9, A10) des ersten bzw. zweiten Operationsverstärkers (38, 40) jeweils an die Kathode einer ersten und einer zweiten Diode (D1, D2) angeschlossen sind, deren Anoden mit dem Ausgang (A) der Mittel zur Erfassung des Fehlertyps sowie über einen Widerstand (R11) mit der Versorgungsspannung (Vcc) verbunden sind.

**Claims**

**1.** A solid-state trip device for an electrical circuit breaker designed to protect a three-phase mains system, comprising current detection means (16), delivering analog signals proportional to the currents flowing in the mains system conductors, and an electronic processing unit (20) to which said signals (I1, I2, I3, IN) are applied and which delivers a circuit breaker tripping order in the event of preset thresholds being exceeded by said signals, a trip device characterized in that the electronic processing unit comprises fault type detection means, comprising comparison means (22, 24, 26, 28) of said signals (I1, I2, I3, IN) with a first threshold (S1), comparison means (30, 32, 34, 36) of said signals with a second threshold (S2), higher than the first threshold (S1) and means (38, 40, D1, D2) whereby it can be determined whether at least a first predetermined number of signals is lower than the first threshold (S1) whereas, at the same time, at least a second predetermined number of signals is higher than the second threshold (S2).

**2.** The trip device according to claim 1, characterized in that the fault type detection means deliver a signal (A) representative of a single-phase fault when said first number is equal to two and said second number to one.

**3.** The trip device according to claim 1, characterized in that the mains system being a three-phase system with neutral, the fault type detection means deliver a signal (A) representative of a single-phase fault when said first number is equal to three and said second number to one.

**4.** The trip device according to anyone of claims 1 to 3, characterized in that In being the rated circuit breaker current, the first threshold (S1) is in the order of 1.5 In and the second threshold (S2) in the order of 5 In.

**5.** The trip device according to claim 1, characterized in that the mains system being a three-phase system with neutral, the fault type detection means deliver a signal (A) representative of a two series pole type fault when said first and second numbers are both equal to two.

**6.** The trip device according to claim 5, characterized in that the electronic processing unit comprising means of achieving an earth fault protection function and means of desensitizing the earth fault protection when the measured signals exceed a preset threshold, the output signal (A) from the fault type detection means

7

inhibits said desensitization means when it is representative of a two series pole type fault.

7. The trip device according to anyone of claims 5 and 6, characterized in that In being the rated circuit breaker current, the first threshold (S1) is in the order of In and the second threshold (S2) in the order of 2 or 3 In.

8. The trip device according to anyone of claims 1 to 7, characterized in that said electronic processing unit (20) is constituted by a microprocessor-based unit.

9. The trip device according to anyone claims 1 to 7, characterized in that the signal comparison means to a first threshold are constituted by a first series of operational amplifiers (22, 24, 26, 28) each receiving on their non-inverting inputs the signal (I1, I2, I3, IN) representative of the current flowing in one of the mains system conductors and on their inverting inputs a signal representative of said first threshold (S1), the outputs (A1-A4) of said operational amplifiers being connected by means of respective resistors (R1-R4) to the inverting input (B1) of a first operational amplifier (38), also connected by means of a resistor (R9) to a supply voltage (Vcc), said first operational amplifier (38) receiving on its non-inverting input a first reference voltage (S3) determined in such a way that its output (A9) is at logic level 1 when at least said first predetermined number of outputs (A1-A4) of the amplifiers of the first series are at logic level 0, a second series of operational amplifiers (30, 32, 34, 36) each receiving on their non inverting inputs the signal (I1, I2, I3, IN) representative of the current flowing in one of the mains system conductors and on their inverting inputs a signal representative of said second threshold (S2), the outputs (A5-A8) of the amplifiers of the second series being connected, by means of respective resistors (R5-R8) to the non inverting input (B2) of a second operational amplifier (40), also connected, by means of a resistor (R10), to the supply voltage (Vcc), said second operational amplifier (40) receiving on its inverting input a second reference voltage (S4) determined in such a way that its output (A10) is at logic level 1 when at least said second predetermined number of outputs (A5-A8) of the amplifiers of the second series are at logic level 1, the outputs (A9, A10) of the first and second operational amplifiers (38, 40) being respectively connected to the cathode of first and second diodes (D1, D2) whose anodes are connected to the output (A) of the fault type detection means and, by means of a resistor (R11), to the supply voltage (Vcc).

Fig. 1

Fig.2

EP 0 396 477 B1

Fig.3